# EUROPEAN PATENT SPECIFICATION

(11) **EP 2 031 690 B1**
(45) Date of publication and mention of the grant of the patent: **20.07.2011**
(21) Application number: 08162752.3
(22) Date of filing: 21.08.2008
(51) Int. Cl.: H01M 10/0567, H01M 10/0568, H01M 10/052, H01M 4/131, H01M 4/133

(54) **Electrolytes, cells and methods of forming passivation layers**
Elektrolyte, Zellen und Verfahren zur Formung von Passivierungsschichten
Électrolytes, cellules et procédés pour la formation de couches de passivation

(30) Priority: 23.08.2007 US 843889
(43) Date of publication of application: 04.03.2009
(73) Proprietor: Air Products and Chemicals, Inc., Allentown, PA 18195-1501 (US)
(72) Inventor: Chen, Zonghai, Bolingbrook, IL 60490 (US); Amine, Khalil, Oak Brook, IL 60523 (US)
(74) Representative: Westendorp | Sommer

(56) References cited:
- EP-A- 1 195 834
- EP-A- 1 513 215
- EP-A- 1 587 158
- EP-A- 1 630 895
- EP-A- 1 679 760
- EP-A- 1 763 099
- EP-A- 1 768 210
- US-A1- 2005 170 253
- US-A1- 2007 065 726
- US-A1- 2007 065 727
- US-A1- 2007 178 370

## Description

### BACKGROUND OF THE INVENTION

Lithium and Lithium-ion secondary batteries, by virtue of the large reduction potential and low molecular weight of elemental lithium, offer a dramatic improvement in power density over existing primary and secondary battery technologies. Lithium secondary batteries are batteries containing metallic lithium as the negative electrode. Lithium ion secondary batteries contain a lithium ion host material as the negative electrode. By "secondary battery" it is meant a battery that provides for multiple cycles of charging and discharging with minimal capacity fade. The small size and high mobility of lithium cations allow for the possibility of rapid recharging. These advantages make lithium ion batteries ideal for portable electronic devices, e.g., cell phones and laptop computers. Recently, larger size lithium ion batteries have been developed and have application for use in automotive applications including the hybrid electric vehicle market.

The following patents are representative of lithium batteries and electrochemical cells:

US 4,201,839 discloses electrochemical cells based upon alkali metal-containing anodes, solid cathodes, and electrolytes where the electrolytes are closoborane compounds carried in aprotic solvents.

US 5,849,432 discloses electrolyte solvents for use in liquid or rubbery polymer electrolyte solutions based upon boron compounds with Lewis acid characteristics, e.g., boron linked to oxygen, halogen atoms, and sulfur.

US 6,346,351 discloses secondary electrolyte systems for a rechargeable battery of high compatibility towards positive electrode structures based upon a salt and solvent mixture. Lithium tetrafluoroborate and lithium hexafluorophosphate are examples of salts.

US 6,159,640 discloses electrolyte systems for lithium batteries used in electronic equipment such as mobile phones, laptop computers, camcorders, etc based upon fluorinated carbamates.

US 6,537,697 discloses a lithium secondary battery using a nonaqueous electrolyte including lithium tetrakis(pentafluorophenyl)borate as an electrolyte salt.

D. Aurbach, A. Zaban, Y. Ein-Eli, I. Weissman, O. Chusid, B. Markovsky, M. Levi, E. Levi, A. Schechter, E. Granot in J. Power Sources 68, (1997), 91-98 and S. Mori, H. Asahina, H. Suzuki, A. Yonei, K. Yokoto in J. Power Sources 68, (1997), 59-64 describe the phenomenon of anode passivation by electrolyte reduction in lithium metal and lithium ion batteries using a carbon host anode material, and its cause of irreversible capacity loss at the graphite anode in lithium ion battery applications. In general, for graphitic carbons some reduction of both solvent and salt_occurs at the graphite surface at low potentials during charging of the cell. This forms a electrode/electrolyte interface layer, sometimes referred to as a solid electrolyte interface (SEI) layer, which in some cases is stable and prevents further capacity loss and in other cases is unstable. The layer is comprised of solvent and salt decomposition products. Use of ethylene carbonate as one of the cosolvents leads to stable passivation layers, while using high levels of propylene carbonate in the absence of ethylene carbonate leads to significant irreversible capacity loss due to exfoliation of the graphite.

US5626981 describes the use of a small amount of vinylene carbonate to improve the passivation layer formed by ethylene carbonate (EC) and EC/propylene carbonate (PC) based solvents with standard electrolyte salts. The final reversible capacity is improved slightly with this additive.

US5571635 discloses that high reversible capacity over multiple charge/discharge cycles is not obtainable in solvent systems which are predominantly propylene carbonate. Propylene carbonate, which is a desirable solvent because of its wide liquid range and high dielectric constant, gives continuous capacity fade by virtue of cointercalation/exfollation reactions. This patent describes the use of chloroethylene carbonate as a cosolvent with propylene carbonate, which acts to form stable passivation films on crystalline graphites when used with standard electrolyte salts, such as LiPF₆, LiBF₄, lithium bis-oxalatoborate (LiBOB), LiCF₃SO₃, etc.. It describes the use of chloroethylene carbonate as an additive for reducing irreversible capacity loss with ethylene carbonate/propylene carbonate solvent mixtures.

EP 1 679 760 A1 discloses a cell comprising a positive electrode, a negative electrode and an electrolyte having a second cycle reduction current at 0.3V vs Li/Li⁺ that is less than that of the first cycle, said electrolyte comprising a salt, which is not reduced above 0.3V vs Li/Li⁺ and/or will not electrochemically passivate (claim 1). Examples of lithium composites to be used as positive electrodes are LiFePO₄ or lithium manganese spinel (EP 1 679 760, page 7, lines 3/4).

EP 1 768 210 A1 discloses an electrochemical cell comprising a negative electrode, a positive electrode and an electrolyte, said electrolyte comprising at least one salt that provides overcharge protection, at least one carrier, and at least one additive (claim 1). Specific salts which provide overcharge protection are e.g. disclosed in claim 20 of EP 1 768 210 A1.

EP 1 763 099 A2 discloses electrolyte salts for electrochemical devices of improved physical, chemical and electrochemical stability. Claim 1 of EP 1 763 099 A2 discloses an electrochemical cell comprising an anode, a cathode and an electrolyte comprising at least one solvent and at least one anion of a specific borate salt.

EP 1 630 895 A discloses lithium secondary batteries comprising a negative electrode, a positive electrode, a separator and a lithium-based electrolyte carried in an aprotic solvent and electrolyte compositions (abstract).

EP 1 587 158 A2 relates to an electrochemical cell comprising a negative electrode, a positive electrode and an electrolyte, said electrolyte comprising a salt that provides overcharge protection (EP 1 587 158 A2, claim 1). Particular salts are disclosed in claim 6 of EP 1587 158 A2 and represent doso-borate anions.

EP 1 513 215 A relates to lithium secondary batteries comprising a negative electrode, a positive electrode, a separator, and a lithium-based electrolyte carried in an aprotic solvent, wherein specific lithium salts are used (EP 1 513 215 A, abstract).

US 2007/0178370 A1 relates to an electrochemical device comprising a cathode, an anode, a non-aqueous electrolyte comprising a redox shuttle additive (US 2007/0178370 A1, claim 1).

US 2007/0065727 A1 discloses an electrolyte for a battery comprising a lithium organo borate salt in a lactone and a low viscosity solvent. The lithium organo borate salt may comprise LiBOB (US 2007/0065727 A1, abstract).

US 2007/0065726 A1 discloses a battery having an electrolyte that includes an organo borate additive and one or more salts in a solvent (US 2007/0065726A1, abstract).

US 2005/0170253 A1 refers to a battery including an electrolyte activating one or more cathodes and one or more anodes. The electrolytes include one or more mono[bidentate]borate salts in a solvent (US 2005/0170253 A1, abstract).]

A key challenge to the reversibility of cells has been the reactivity of the electrolyte solution components (salt and solvent); especially under the charging conditions. Heretofore, it has been observed that all electrolyte salts and solvents undergo some reduction at the negative electrode during at least the initial charging step. This reduction can either lead to a stable, conducting passivation layer or film also referred to as a Solid Electrolyte Interface or SEI layer, or reduction can continue with charge/discharge cycling eventually leaving no reversible capacity in the negative electrode.

### BRIEF SUMMARY OF THE INVENTION

The instant invention solves problems associated with conventional reversible or rechargeable cells employed in lithium secondary batteries by providing an electrolyte that provides a suitable SEI layer. The present invention can also provide an electrolyte which imparts improved thermal stability to lithium ion batteries compared to conventional electrolytes for lithium ion batteries. By thermal stability, it is meant that a battery retains at least about 80% of its original capacity while being cycled between charge and discharge conditions at a temperature of about 50°C or greater.

The invention further provides improved cell stability on overcharge

This invention further applies to an electrolyte as described above further comprising at least one additive.

This invention applies to an electrolyte as described above where the additive is selected from the chelato-borate salts.

Thus, the present invention relates to a cell comprising: a positive electrode, a negative electrode and an electrolyte wherein the electrolyte comprises at least one organic aprotic carrier, at least one salt of the formula:

LiₐQ

where Q is a borate cluster anion or heteroborate cluster anion, and a is 1 or 2, and at least one additive, wherein the additive comprises a lithium chelatoborate salt, and wherein the additive is present in the electrolyte in an amount of between 0.1 and 5 % of the total weight of the electrolyte, and wherein the positive electrode comprises at least one of Li_{1.1}[Mn_{⅓}Ni_{⅓}Co_{⅓}]_{0.9}O₂, and LiNi_{1-x-y}CoₓMn_{y}O₂.

In a preferred embodiment of the invention, the cell is thermally stable.

In a preferred embodiment, the salt comprises Li₂B₁₂FₓZ₁₂₋ₓ wherein x is at least 5 but less than or equal to 12 and Z represents H, Cl, or Br.

In a preferred embodiment, the chelatoborate comprises a lithium difluoro(oxalato) borate.

In a preferred embodiment, the negative electrode comprises at least one of graphite, amorphous carbon, hard carbon, tin, silicon, and lithium titanate.

In a preferred embodiment, the negative electrode comprises a carbonaceous material.

In a preferred embodiment, the positive electrode comprises Li_{1.1}[Mn_{⅓}Ni_{⅓}Co_{⅓}]_{0.9}O₂.

In a preferred embodiment, the solvent comprises ethylene carbonate.

In a preferred embodiment, the solvent comprises ethyl methyl carbonate.

This invention further applies to an electrolyte as described above where the additive comprises at least one lithium difluorooxalatoborate.

The invention further provides a cell particularly comprising a positive electrode, a negative electrode and an electrolyte, said electrolyte providing better high temperature charge/discharge cycling stability than conventional electrolytes for lithium ion batteries.

This invention further provides cells as described above particularly further comprising lithium.

This invention further provides cells particularly comprising lithium of the formula:

LiₐQ

where Q comprises a monovalent or divalent borate or heteroborate cluster anion, a may be 1 or 2.

### BRIEF DESCRIPTION OF THE DRAWINGS

Figure 1 shows the voltage profile of an MCMB anode / Li_{1.1}[Mn_{1/3}Ni_{1/3}Co_{1/3}]_{0.9}O₂ cathode lithium ion cell during an 8C-rate pulse overcharge experiment. The electrolyte was 1.2M LiPF₆ in EC/PC/DMC(1:1:3 by weight). MCMB refers to a synthetic graphite negative electrode material with a meso-carbon-micro-bead composite structure.

Figure 2 shows the voltage profile of a MCMB/Li_{1.1}[Mn_{1/3}Ni_{1/3}Co_{1/3}]_{0.9}O₂ lithium ion cell during an 8C-rate pulse overcharge experiment. The electrolyte was 0.8 M LiB(C₂O₄) - LiBOB in EC/PC/DMC(1:1:3 by weight).

Figure 3 shows the voltage profile of a MCMB/Li_{1.1}[Mn_{1/3}Ni_{1/3}Co_{1/3}]_{0.9}O₂ lithium ion cell during an 8C-rate pulse overcharge experiment. The electrolyte was 0.4 M Li₂B₁₂F₉H₃ in EC/PC/DMC(1:1:3 by weight).

Figure 4 shows the voltage profile of a MCMB/Li_{1.1}[Mn_{1/3}Ni_{1/3}Co_{1/3}]_{0.9}O₂ lithium ion cell during an 8C-rate pulse overcharge experiment. The electrolyte was 0.4 M Li₂B₁₂P₉H₃ in EC/PC/DMC(1:1:3 by weight) with 2 wt. % LiBF₂(C₂O₄) - LiDFOB as an additive.

Figure 5 shows the voltage profile of a MCMB/LiMn₂O₄ lithium ion cell during an 1 C-rate pulse overcharge experiment. The electrolyte was 1.2M LiPF₆ in EC/PC/DMC(1:1:3 by weight).

Figure 6 shows the voltage profile of a MCMB/LiMn₂O₄ lithium ion cell during an 1 C-rate pulse overcharge experiment. The electrolyte was 0.7M LiBOB in EC/PC/DMC(1:1:3 by weight).

Figure 7 shows the voltage profile of a MCMB/LiMn₂O₄ lithium ion cell during an 5 C-rate pulse overcharge experiment. The electrolyte was 0.4 M Li₂B₁₂F₉H₃ in EC/PC/DMC(1:1:3 by weight) with 2 wt. % LiBF₂(C₂O₄) - LiDFOB as an additive.

Figure 8 shows the nominal capacity retention of MCMB/Li_{1.1}[Mn_{1/3}Ni_{1/3}Co_{1/3}]_{0.9}O₂ (L333) lithium ion cells cycled at 55°C with a constant current of C/2, or 1.2 mA. The electrolyte used for the control cell was 1.2M LiPF₆ in EC/PC/3DEC by weight. The electrolyte used for the other cell was 0.4 M Li₂B₁₂F₉H₃ in 3EC/7EMC (by weight) with 2 wt. % LiBF₂(C₂O₄) as an additive.

Figure 9 shows the electrochemical impedance spectra of MCMB/ Li_{1.1}[Mn_{1/3}Ni_{1/3}Co_{1/3}]_{0.9}O₂ (L333) lithium-ion cells that were constant-voltage charged to 3.8 V with 0.4 M Li₂B₁₂F₉H₃ in 3EC/7EMC(by weight) with different additive levels of LiBF₂(C₂O₄) as the electrolyte.

Figure 10 shows shows the area specific impedance of MCMB/ Li_{1.1}[Mn_{1/3}Ni_{1/3}Co_{1/3}]_{0.9}O₂ (L333) lithium-ion cells with 0.4 M Li₂B₁₂F₉H₃ in 3EC/7EMC(by weight) with different additive levels of LiBF₂(C₂O₄) as the electrolyte.

Figure 11 shows shows the discharge capacity retention of MCMB/ Li_{1.1}[Mn_{1/3}Ni_{1/3}Co_{1/3}]_{0.9}O₂ (L333) lithium-ion cells cycled at 55°C with a constant current of 1.0 mA, or C/2. The electrolytes used were 0.4 M Li₂B₁₂F₉H₃ in 3EC/7EMC (by weight) with different levels of LiBF₂(C₂O₄) as an additive.

Figure 12 shows shows the discharge capacity retention of MCMB/ Li_{1.1}[Mn_{1/3}Ni_{1/3}Co_{1/3}]₀.₉O₂ (L333) lithium-ion cells cycled at 55°C with a constant current of 1.0 mA, or C/2. The electrolyte used for the control cell was 1.2 M LiPF₆ in 3EC/7EMC (by weight). The electrolyte of the invention used in the other cell was 0.4 M Li₂B₁₂F₁₂ in 3EC/7EMC (by weight) with 2 wt. % LiBF₂(C₂O₄) as an additive.

Figure 13 shows shows the discharge capacity of carbon/LiMn₂O₄ lithium-ion cells cycled at 55°C with a constant current of 1C, or 250 mA. The electrolyte used for the control cell was 1.2 M LiPP₆ in 3EC/7EMC (by weight). The electrolyte of the invention used in the other cell was 0.4 M Li₂B₁₂F₁₂ in 3EC/7EMC (by weight) with 2 wt. % LiBF₂(C₂O₄) as an additive.

### DETAILED DESCRIPTION OF THE INVENTION

A secondary battery or cell capable of multiple cycles of charging and discharging, is dependent on an electrolyte carrying ions. The term electrolyte may refer to an electrolyte salt, electrolyte salt in a solvent, an electrolyte salt in a polymer or gel or an electrolyte salt in an ionic liquid or a fully formulated electrolyte within a battery. In cells having a full-charge potential of greater than 2V, electrolyte salts and solutions for such cells should provide: (a) a relatively high conductivity in a non-aqueous ionizing solution, (b) chemical stability to heat, e.g. cell temperatures of > 50°C, preferably > 80°C and more preferably > 100°C, and stability toward hydrolysis and/or HF generation in the presence of water or alcohols, and electrochemical cycling over a wide potential range, e.g., 3 to 3.6V, preferably 3 to 4.2 V and more preferably 3 to > 4.2V, and/or (c) an ability of the electrolyte and/or additives therein to form a stable, passivating ion conducting interfacial or SEI layer at the electrode/electrolyte interface.

A battery may comprise one or more electrochemical cells; however the terms battery and cell may be used interchangeably herein to mean a cell. Any reference to a voltage herein refers to voltage versus the lithium/lithium⁺ (Li/Li⁺) couple.

The electrolyte of this invention comprises at least one salt that is chemically very stable, not readily reduced and/or will not provide electrochemical passivation (passivation is achieved in the instant invention by the employing the compositions described herein). Electrochemical passivation is a process which results in the formation of a film on an electrode surface, which limits further reactivity of the electrolyte with the electrode. If passivation does not occur then the cell will undergo continuous capacity fade as active lithium in the negative electrode reacts with the electrolyte on each charging cycle.

The salt can be any salt or mixture of salts. In one embodiment, the salt comprises a lithium salt of the formula:

LiₐQ

where Q comprises a monovalent or divalent borate or heteroborate cluster anion, and a is 1 or 2. The group Q comprises at least one member selected from the following borate (i) and heteroborate (ii and iii) anions:
i) The *closo*-borate anion compositions of formula (BₙZₙ)²⁻, where Z comprises F, H, Cl, Br, and/or (OR), where R comprises H, C₁₋₈, preferably C₁₋₃ alkyl or fluoroalkyl, and n is 8 to 12. The compositions are polyhedral clusters consisting of eight to twelve boron atoms where each boron is attached as defined to a hydrogen, a halogen atom or hydroxyl group.
ii) The *closo*-ammonioborate anion compositions of formula:

   ((R'R''R''')NBₙZₙ₋₁)¹⁻;

   where N is bonded to B and each of R', R", and R'" is independently selected from the group consisting of hydrogen, alkyl, aryl and/or a polymer, Z comprises F, H, Cl, Br, and/or (OR), where R comprises H, alkyl, fluoroalkyl or aryl; and n is 8 to 12. These anion compositions are also polyhedral boron clusters of 8 to 12 boron atoms, where one of the boron atoms is attached to an ammonia group (NR'R"R"'), with F, H, Cl, Br and OR groups attached to the remaining boron atoms. A description of these compositions may be found in US 6,335,466 B1. The alkyl, and fluoroalkyl groups may be branched, cyclic or straight-chained groups having 1 to 20 carbon atoms, and if fluorinated may have 1 to 42 fluorine atoms. The term aryl refers to aromatic ring systems, usually containing 5 to 20 ring atoms. Polymers can comprise at least one member selected from the group consisting of polystyrene, polyethylene, polyethylene glycol, among others, which allow the anions to be bound to a polymeric support.
iii) The *closo*-monocarborate anion compositions of formula: (R""CBₙZₙ)¹⁻, where R"" is bonded to C and selected from the group consisting of hydrogen, alkyl, cycloalkyl, aryl, and a polymer; Z comprises F, H, Cl, Br, and/or (OR), where R comprises H, alkyl or fluoroalkyl; and n is 7 to 11. These fluorinated *closo*-monocarborate anion compositions are also polyhedral clusters that comprise 7-11 boron atoms and a single carbon atom. Such anion compositions are described in US 6,130,357. The alkyl, and fluoroalkyl groups may comprise branched, cyclic or straight-chained groups having 1 to 20 carbon atoms, and if fluorinated will have 1 to 42 fluorine atoms. The term aryl refers to aromatic ring systems, typically containing 5 to 20 ring atoms. Polymers comprise at least one member selected from the group consisting of polystyrene, polyethylene, polyethylene glycol, among others, which allow the anions to be bound to a polymeric support.

Examples of lithium salts that can comprise the electrolyte salt of this invention are lithium fluoroborates represented by the formulas:

Li₂B₁₀fₓZ₁₀₋ₓ

and

Li₂B₁₂FₓZ₂₋ₓ

wherein x is at least 1, or at least 3 for the decaborate salt, or at least 5, or at least 6, or at least 8 but less than or equal to 12, for the dodecaborate salts. Z represents H, Cl, Br, or OR, where R = H, C₁₋₈, typically C₁₋₃ alkyl or fluoroalkyl. Useful compounds are Li₂B₁₂F₁₂, and mixtures of Li₂B₁₂FₓZ₁₂₋ₓ where x is 6, 7, 8, 9, 10, 11 and 12.

Specific examples of lithium fluoroborate compounds comprise at least one member selected from the group consisting of Li₂B₁₂F₈₋₁₂Z₀₋₄ where Z comprises Cl, Br, or OR where R comprises C₁₋₈, usually C₁₋₃. Typically, the salts comprise at least one member selected from the group consisting of Li₂B₁₀F₁₀, Li₂B₁₂F₁₂, Li₂B₁₂F₁₀₋₁₂(OH)₀₋₂, Li₂B₁₂F₁₀₋₁₂(Cl)₂, Li₂B₁₂F₈₋₁₀(H)₀₋₂, Li₂B₁₂F₈₋₁₂(OCF₃)₀₋₄, and Li₂B₁₀F₈₋₁₀Br₀₋₂.

The electrolyte further comprises a solvent or carrier, referred to collectively as solvent, to provide an electrolyte solution. The solvent or carrier may be an aprotic polar organic solvent. Typically, these aprotic solvents are anhydrous, forming anhydrous electrolyte solutions. By "anhydrous" it is meant that the solvent or carrier as well as the electrolyte comprises less than about 1,000 ppm water and normally less than about 500 to 100 ppm. Examples of aprotic organic solvents or carriers for forming the electrolyte solutions comprise at least one member selected from the group consisting of organic carbonates, such as ethylene carbonate (EC), propylene carbonate (PC), dimethyl carbonate (DMC), ethyl methyl carbonate (EMC), diethyl carbonate (DEC), methyl propyl carbonate (MPC), ethyl propyl carbonate (EPC), dipropyl carbonate (DPC), bis(trifluoroethyl) carbonate, bis(pentafluoropropyl) carbonate, trifluoroethyl methyl carbonate, pentafluoroethyl methyl carbonate, heptafluoropropyl methyl carbonate, perfluorobutyl methyl carbonate, trifluoroethyl ethyl carbonate, pentafluoroethyl ethyl carbonate, heptafluoropropyl ethyl carbonate, perfluorobutyl ethyl carbonate, etc., esters, such as gamma butyrolactone, methyl acetate, methyl propionate, methyl butyrate, among others, ethers such as dimethyl ether, or glymes, fluorinated oligomers, dimethoxyethane, tetraethyleneglycol, polyethylene glycols, sulfones, and gamma-butyrolactone (GBL). The solvent or carrier can also comprise at least one ionic liquid. By ionic liquid it is meant any room temperature molten salt. Examples of suitable ionic liquids comprise at least one member selected from the group consisting of asymmetric tetraalkyl ammonium salts of weakly coordinating anions such as butyltrimethylammonium tetrafluoroborate, hexyl-trimethylammonium trifluoromethanesulfonimide, N-alkylpiperidium salts of weakly coordinating anions including N-methyl piperidinium tetrafluoroborate, N-ethylpiperidinium trifluoromethane sulfonate, N-butyl piperidinium trifluoromethanesulfonimide, among others, including those which do not contain active or reducible hydrogens in the cation of the liquid. The amount of any given solvent component in an electrolyte formulation normally ranges from about 5 %to about 95 wt% of the electrolyte.

In another embodiment, the electrolyte of the present invention can comprise an aprotic gel polymer carrier/solvent. Suitable gel polymer carrier/solvents can comprise at least one member selected from the group consisting of polyethers, polyethylene oxides, polyimides, polyphosphazines, polyacrylonitriles, polysiloxanes, polyether grafted polysiloxanes, derivatives of the foregoing, copolymers of the foregoing, crosslinked and network structures of the foregoing, blends of the foregoing, among others, to which is added an appropriate ionic electrolyte salt. Other gel-polymer carrier/solvents can comprise those prepared from polymer matrices derived from at least one member selected from the group consisting of polypropylene oxides, polysiloxanes, sulfonated polyimides, perfluorinated membranes (Nafion^{™} resins), divinyl polyethylene glycols, polyethylene glycol-bis-(methyl acrylates), polyethylene glycol-bis(methyl methacrylates), derivatives of the foregoing, copolymers of the foregoing, crosslinked and network structures of the foregoing. The aprotic gel polymer carrier may contain any of the aprotic liquid carriers described in the preceding paragraph.

If the electrolyte comprises the electrolyte salt in a solution, typically the concentration of salt will be from about 0.05 to about 2 molar or from about 0.1 to about 1.2 molar, or from about 0.2 to about 0.5 molar. Higher concentrations tend to become too viscous and, the bulk conductivity characteristics of a cell using the electrolyte may be adversely affected.

The electrolyte salts of this invention have been shown to provide overcharge protection as described in US 20050227143A1, which is an advantage in use in lithium ion batteries. The chemical stability of the salts in the electrolytes of this invention, for example, Li₂B₁₂F₁₂ and Li₂B₁₂F₉H₃, which also makes them desirable as electrolyte salts for battery applications, may prevent their participation in reductive passivation chemistry. When standard formation charging cycle(s) are used, a stable passivation film is not formed by the salts or solutions of these salts, e.g., such as described in US 6,346,351. Formation cycle(s) are the initial charge/discharge cycle or cycles of an assembled cell designed to form the SEI layer, and otherwise conditioning the cell for use. Typically, the charge/discharge formation cycle(s) is(are) performed at a slower rate than the charge/discharge rate under the normal operating conditions of the cell. The optimum conditions of the formation cycle can be determined experimentally for each electrolyte and battery. The term "formation cycle" will be used herein to mean either one or more than one charge/discharge cycle to form the SEI layer. Without a stable SEI layer, the cell typically undergoes continual capacity fade on charging and discharging. We have found that if the electrolytes of formula (1) are combined with small amounts of another salt(e.g., to form an enhanced SEI layer), the charge/discharge cycle life of cells using this electrolyte can be improved over standard electrolytes, particularly at cell temperatures > 50°C. Thus a cell which has better stability at elevated temperature and under overcharging conditions can be designed if the electrolytes of this invention are used.

According to this invention, the electrolyte further comprises such an SEI forming salt as an additive to aid passivation layer (SEI layer) formation. The additive can function to form a stable passivation layer. The passivation layer may contain reduction products of the solvent, and/or additive, and/or electrolyte salt. The additive will typically be an organic material, inorganic salt or mixtures thereof.

Additives that are organic compounds that can function to form the passivation layer can comprise at least one member selected from the group consisting of chloroethylene carbonate, vinylene carbonate (VC), vinylethylenecarbonate (VEC), and non-carbonate species such as ethylene sulfite, propane sulfone, propylene sulfite, as well as substituted carbonates, sulfites and butyrolactones, such as phenylethylene carbonate, phenylvinylene carbonate, catechol carbonate, vinyl acetate, vinylethylene carbonate, dimethyl sulfite, fluoroethylene carbonate, trifluoropropylene carbonate, bromo gamma-butyrolactone, fluoro gamma-butyrolactone, among others which provide organic salts on reduction at the at least one electrode, particularly the negative electrode.

Additives that are inorganic compounds or salts that may be useful in this invention can comprise at least one compound containing boron, phosphorous, sulfur or fluorine, among others. Additives that are used in the invention comprise at least one member selected from the group consisting of lithium chelatoborate salts (e.g., Li difluorooxalatoborate, LiBF₂(C₂O₄) or LiDFOB, LiB(C₂O₃CF₃)₂, LiBF₂(C₂O₃CF₃), and LiB(C₃H₂O₃(CF₃)₂)₂ as described in US Patent No. 6407232, EP 133532B1 and JP2005032716 A ). Examples of suitable additives and methods for making these additives are also described in U.S. Patent Nos. 6,783,896 and 6,849,752.

For a lithium containing electrolyte, the passivation layer (SEI layer) formed by the additives listed herein may comprise lithium alkyl carbonates and Li₂CO₃ (from the electrolyte solvent/organic additive reduction), LiF, and salt reduction products, including the reduction products of the oxalatoborate salts with the solvents (e.g., B(OCO₂R)₃, where R is a lithium alkyl carbonate salt derived from solvent oxidation). The SEI layer will typically be about 5nm to about 1000nm in thickness. The SEI layer can be formed upon the negative electrodes described herein. While the SEI layer will normally be formed in situ upon the negative electrode, if desired, the negative electrode can be pretreated with the SEI layer composition.

The additive can be present in the electrolyte in an amount which forms an effective SEI layer. According to the invention, the additive is present in an amount between about 0.1 and about 5 % of the total weight of the electrolyte..
The battery or cell of this invention comprises any negative electrode and positive electrode, and the electrolyte of this invention. In one embodiment, the positive and negative electrodes of the battery are any using lithium containing materials, or materials that are capable of "hosting" ions in reduced or oxidized form, such as lithium. "Hosting" means that the material is capable of reversibly sequestering the ions, for example, lithium ions. The negative electrodes for the batteries of this invention can comprise at least one member selected from the group consisting of lithium metal, carbonaceous materials, such as amorphous carbon, including hard carbon or graphites (natural or artificial, including MCMB [available from Osaka Gas]), tin, tin oxide, silicon, or germanium compounds or metal oxides or derivatives of those materials (e.g., lithium titanate). The positive electrodes for use in batteries of this invention may be based upon a lithium composite oxide with a transition metal such as cobalt, nickel, manganese, mixtures thereof, among others, or a lithium composite oxide, part of whose lithium sites or transition metal sites is replaced with at least one member selected from the group consisting of cobalt, nickel, manganese, aluminum, boron, magnesium, iron, copper, or the like, or iron complex compounds such as iron phosphates and iron phosphosilicates. Lithium composites according to the invention for use as positive electrodes comprise at least one of Lí_{1.1}[Mn_{1/3}Ni_{1/3}Co_{1/3}]_{0.9}O₂, and LiNi_{1-x-y}CoₓMn_{y}O₂. Also suitable are: lithium iron phosphate, LiFe PO₄, LiNi₁₋ₓ CoₓO₂, lithium manganese spinel, LiMn₂ O₄, LiNi_{0.8}Co_{0.15}Al_{0.05}O₂, LiCoO₂ and LiNiO₂.

The separator for the lithium battery can comprise a microporous polymer film. Examples of polymers for forming films comprise at least one member selected from the group consisting of nylon, cellulose, nitrocellulose, polysulfone, polyacrylonitrile, polyvinylidene fluoride, polypropylene, polyethylene, polybutene, mixtures thereof, among others. Ceramic separators, based on silicates, aluminio-silicates, and their derivatives, among others, may also be used. Surfactants may be added to the separator or electrolyte to improve electrolyte wetting of the separator. Other components or compounds known to be useful in electrolytes or cells may be added.

In one embodiment, the battery is comprised of a carbonaceous lithium ion hosting negative electrode, a positive electrode, a separator, and a lithium-based electrolyte salt carried in an aprotic solvent, gel polymer or polymer matrix. Examples of carbonaceous negative electrodes include graphites.

In another embodiment, the battery particularly comprises an electrolyte comprising a polar organic solvent, a salt comprising Li₂B₁₂FₓZ₁₂₋ₓ wherein x is at least 5 but less than or equal to 12 and Z represents H, Cl, or Br; an LiBF₂(C₂O₄) additive, an anode comprising graphite or hard carbon, and a cathode comprising Li_{1.1}[Mn_{1/3}Ni_{1/3}Co_{1/3}]₀.₉O₂. This battery can have a suitable SEI layer as well as thermal stability.

The electrolytes of this invention, together with additives which form stable SEI layers, such as LiBF₂(C₂O₄), can provide very stable cell performance at elevated temperature, such that the charge/discharge capacity retention at > 50°C remains > than 80% for more than twice as many cycles as cells based on standard LiPF₆ electrolytes. The electrolytes of this invention can be employed in a wide range of electrochemical devices including secondary batteries, capacitors, hybrid capacitors, fuel cells and electrolyzers among other applications.

The following examples are intended to illustrate various embodiments of the invention and do not limit the scope of the claims appended hereto.

### EXAMPLES

### Control Example 1a

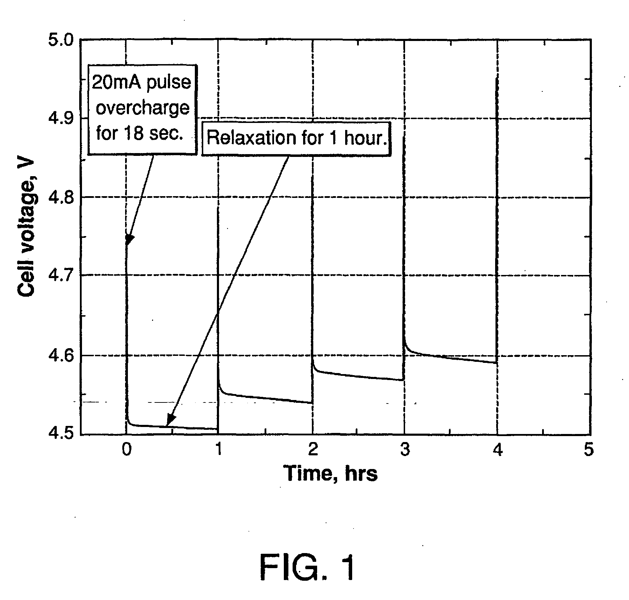

FIG. 1 shows the cell voltage of a MCMB/Li_{1.1}[Mn_{1/3}Ni_{1/3}Co_{1/3}]₀.₉O₂ (L333) lithium-ion cell that was pulse-overcharged. The electrolyte used was 1.2 M LiPF₆ in EC/PC/DMC (1:1:3 by weight, EC stands for ethylene carbonate, PC stands for propylene carbonate, and DMC stands for dirnethyl carbonate.). The cell was pulse-overcharged at an 8C rate (20 mA) for 18 seconds every 60 minutes. FIG. 1 clearly shows that the cell voltage steadily increased with the number of pulse current applied. Only in 4 pulses, the peak voltage of the cell increased to 4.95 V, which is high enough to trigger the decomposition of the positive electrode and the non-aqueous electrolytes.

### Control Example 1 b

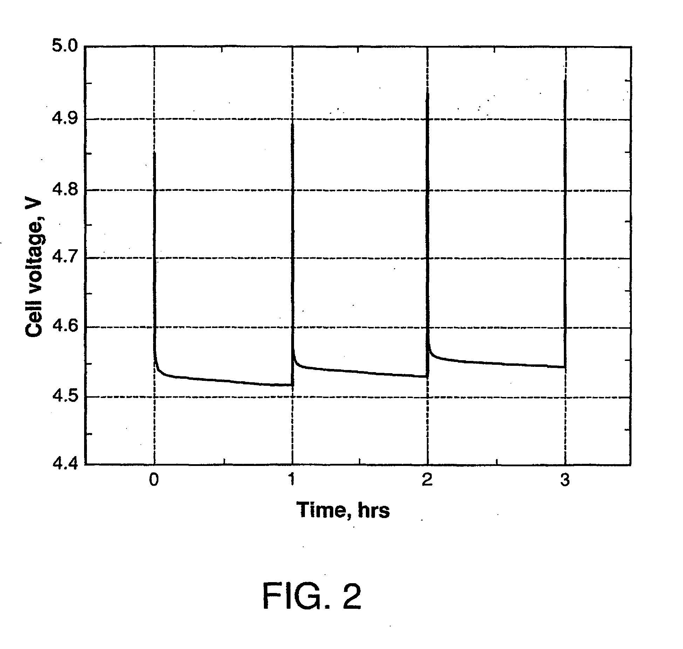

FIG. 2 shows the cell voltage of a MCMB/ Li_{1.1}[Mn_{1/3}Ni_{1/3}Co_{1/3}]₀.₉O₂ (L333) lithium-ion cell that was pulse-overcharged. The electrolyte used was 0.8 M LiBOB in EC/PC/DMC (1:1:3 by weight). The cell was pulse-overcharged at an 8C rate (20 mA) for 18 seconds every 60 minutes. FIG. 2 clearly shows that the cell voltage steadily increased with the number of pulse current applied. Only in 4 pulses, the peak voltage of the cell increased to 4.95 V, which is high enough to trigger the decomposition of the positive electrode and the non-aqueous electrolytes.

### Control Example 1c

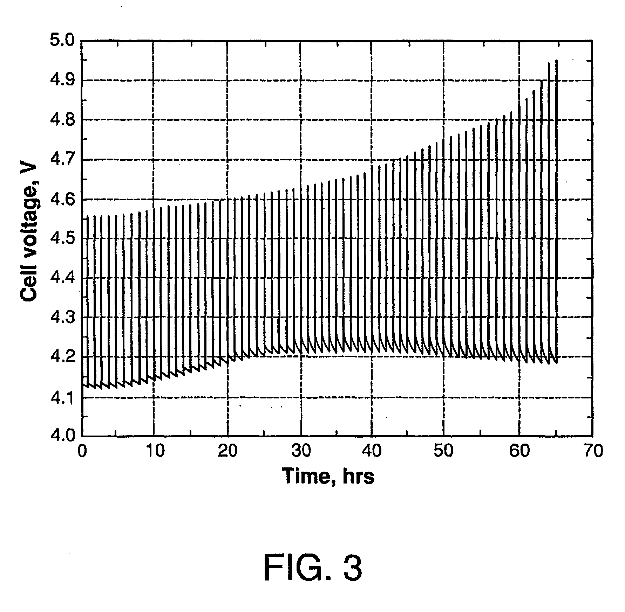

FIG. 3 shows the cell voltage of a MCMB/ Li_{1.1}[Mn_{1/3}Ni_{1/3}Co_{1/3}]₀.₉O₂ (L333) lithium-ion cell that was pulse-overcharged. The electrolyte used was 0.4 M Li₂B₁₂F₉H₃ (AP-F9) in EC/PC/DMC (1:1:3 by weight). The cell was pulse-overcharged at an 8C rate (20 mA) for 18 seconds every 60 minutes. FIG. 3 clearly shows that the salt AP-F9 has the redox shuttle capability to carry charge through the lithium-ion cell and hence improve the pulse overcharge tolerance of the cell.

### Example 1

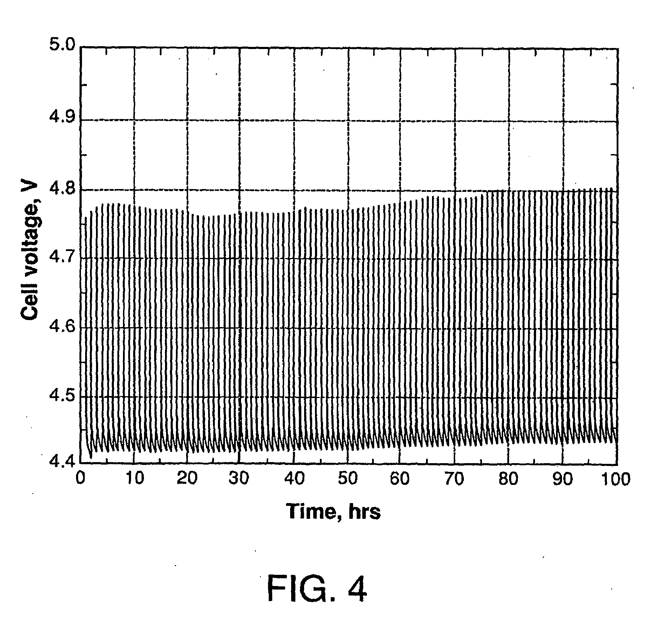

FIG. 4 shows the cell voltage of a MCMB/ Li_{1.1}[Mn_{1/3}Ni_{1/3}Co_{1/3}]₀.₉O₂ (L333) lithium-ion cell that was pulse-overcharged. The electrolyte used was 0.4 M Li₂B₁2F₉H₃ (AP-F9) in EC/PC/DMC (1:1:3 by weight) with 2 wt% lithium difluoro(oxalato)borate (LiDFOB). The cell was pulse-overcharged at an 8C rate (20 mA) for 18 seconds every 60 minutes for 100 pulses. FIG. 4 clearly shows that the cell comprising 0.4 M AP-F9 and 2.0 wt% LiDFOB as the additive had excellent pulse overcharge tolerance. The cell voltage was stabilized at about 4.8 V after the overcharge pulses.

### Control Example 2a

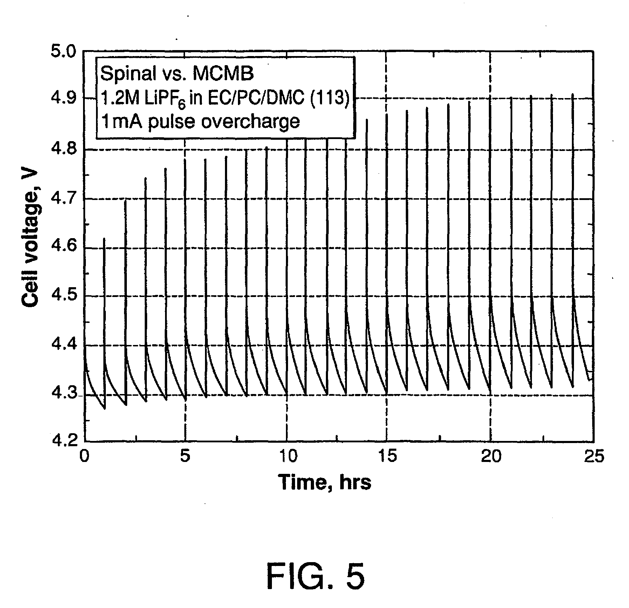

FIG. 5 shows the cell voltage of a MCMEI/LiMn₂O₄ lithium-ion cell that was pulse-overcharged. The electrolyte used was 1.2 M LiPF₆ in EC/PC/DMC (1:1:3 by weight). The cell was pulse-overcharged at a 1C rate (1 mA) for 18 seconds every 60 minutes. FIG. 5 clearly shows that the cell voltage steadily increased with the number of pulse current applied. In 25 pulses, the peak voltage of the cell increased to 4.95 V, which is high enough to trigger the decomposition of the positive electrode and the nonaqueous electrolytes.

### Control Example 2b

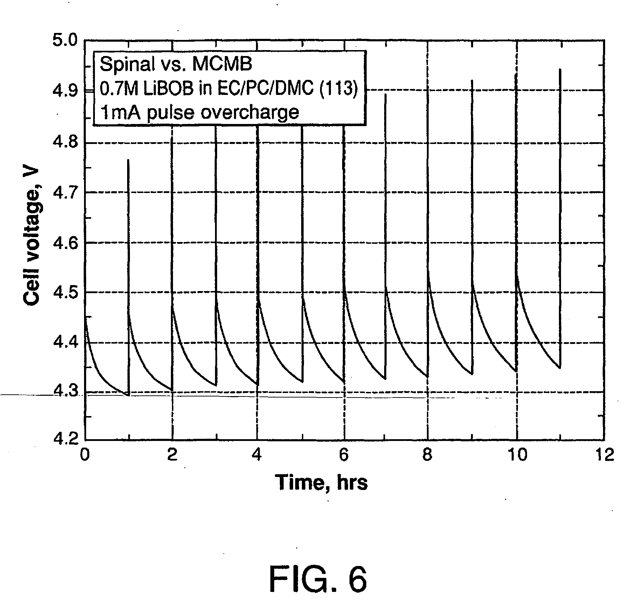

FIG. 6 shows the cell voltage of a MCMB/LiMn₂O₄ lithium-ion cell that was pulse-overcharged. The electrolyte used was 0.8 M LiBOB in EC/PC/DMC (1:1:3 by weight). The cell was pulse-overcharged at a 1C rate (1 mA) for 18 seconds every 60 minutes. FIG. 6 clearly shows that the cell voltage steadily increased with the number of pulse current applied. Only in 11 pulses, the peak voltage of the cell increased to 4.95 V, which is high enough to trigger the decomposition of the positive electrode and the nonaqueous electrolytes.

### Comparative Example 2

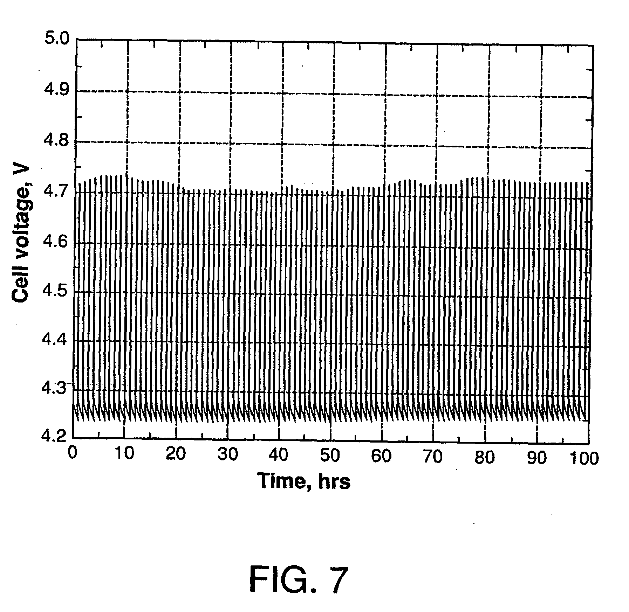

FIG. 7 shows the cell voltage of a MCMB/LiMn₂O₄ lithium-ion cell that was pulse-overcharged. The electrolyte used was 0.4 M Li₂B₁₂F₉H₃ (AP-F9) in EC/PC/DMC (1:1:3 by weight) with 2 wt% lithium difluoro(oxalato)borate (LiDFOB). The cell was pulse-overcharged at a 5C rate (5 mA) for 18 seconds every 60 minutes for 100 pulses. FIG. 7 clearly shows that the cell comprising 0.4 M AP-F9 and 2.0 wt% LiDFOB as the additive had excellent pulse overcharge tolerance. The cell voltage was stabilized at about 4.7 V after the overcharge pulses.

### Example 3

Cell performance of a conventional electrolyte (1 M LiPF₆ in EC/PC/3DMC) vs. 0.4 M Li₂B₁₂F₉H₃ in 3EC/7EMC

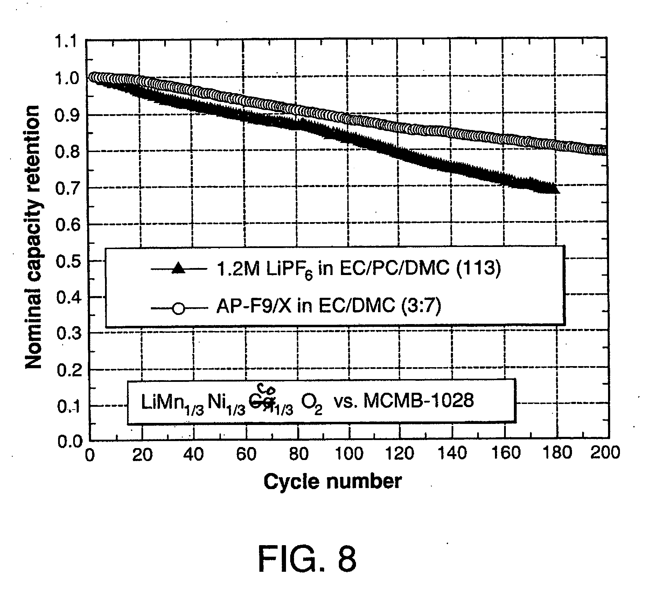

Figure 8 shows the nominal capacity retention of MCMB/Li_{1.1}[Mn_{1/3}Ni_{1/3}Co_{1/3}]₀.₉O₂ (L333) lithium ion cells cycled at 55°C with a constant current of C/2, or 1.2 mA. The electrolyte used for the control cell was 1.2M LiPF₆ in EC/PC/3DEC by weight. The electrolyte used for the other cell was 0.4 M Li₂B₁₂F₉H₃ in 3EC/7EMC (by weight) with 2 wt. % LiBF₂(C₂O₄) as an additive. The cells with the electrolyte of this invention show improved capacity retention than that using the conventional electrolyte.

### Example 4

Effect of LiBF₂(C₂O₄) as an additive on the electrochemical and area specific impedances of cells with 0.4 M Li₂B₁₂F₉H₃ in 3EC/7EMC

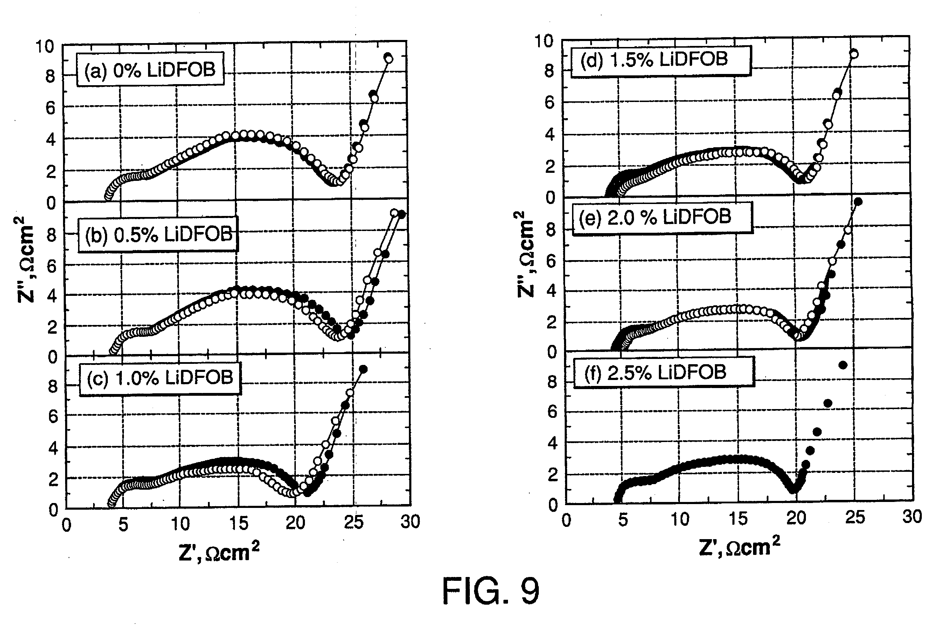

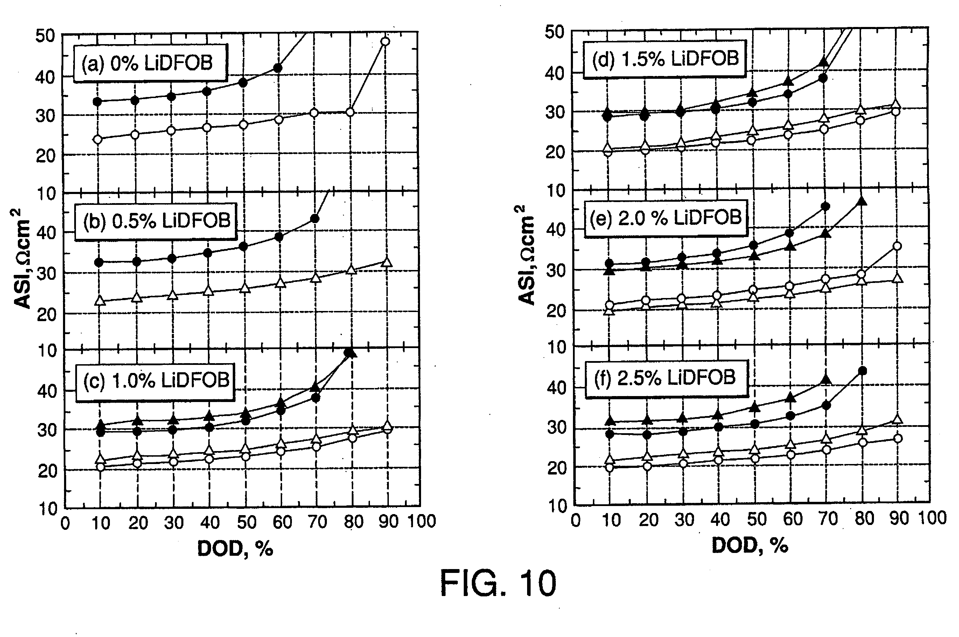

Fig. 9 shows the electrochemical impedance spectra of MCMB/ Li_{1.1}[Mn_{1/3}Ni_{1/3}Co_{1/3}]₀.₉O₂ (L333) lithium-ion cells that were constant-voltage charged to 3.8 V with 0.4 M Li₂B₁₂F₉H₃ in 3EC/7EMC(by weight) with different additive levels of LiBF₂(C₂O₄) as the electrolyte. Fig. 2 shows that the cell impedance initially decreased with the content of the added LiBF₂(C₂O₄) and the cell imedance remained almost unchanged when more than 1.5% LiBF₂(C₂O₄) was added. Similar results are seen in Fig. 10 for area specific impedance tests of these cells. The area specific impedance initially decreased with the content of the added LiBF₂(C₂O₄) and the cell impedance remained almost unchanged when more than 1.5%.

### Example 5

Cycling stability of MCMB/ Li_{1.1}[Mn_{1/3}Ni_{1/3}Co_{1/3}]₀.₉O₂ (L333) lithium-ion cells with electrolytes containing Li₂B₁₂F₉H₃ and varying amounts of LiBF₂(C₂O₄)

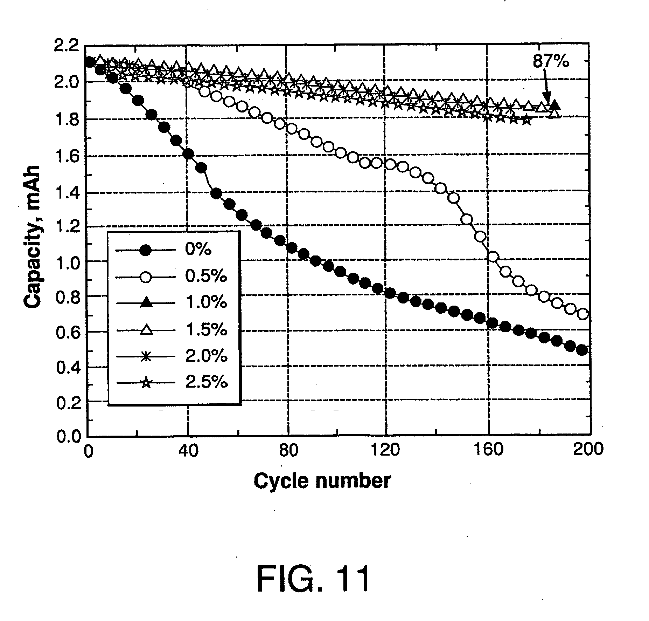

Figure 11 shows the discharge capacity retention of MCMB/ Li_{1.1}[Mn_{1/3}Ni_{1/3}Co_{1/3}]₀.₉O₂ (L333) lithium-ion cells cycled at 55°C with a constant current of 1.0 mA, or C/2. The electrolytes used were 0.4 M Li₂B₁₂F₉H₃ in 3EC/7EMC (by weight) with different levels of LiBF₂(C₂O₄) as an additive. Fig. 11 shows that > 1 % LiBF₂(C₂O₄) is useful as an additive to achieve good capacity retention with Li₂B₁₂F₉H₃.

### Example 6

Cell performance of a conventional electrolyte (1.2 M LiPF₆ in 3EC/7EMC) vs. 0.4 M Li₂B₁₂F₁₂ in 3EC/7EMC

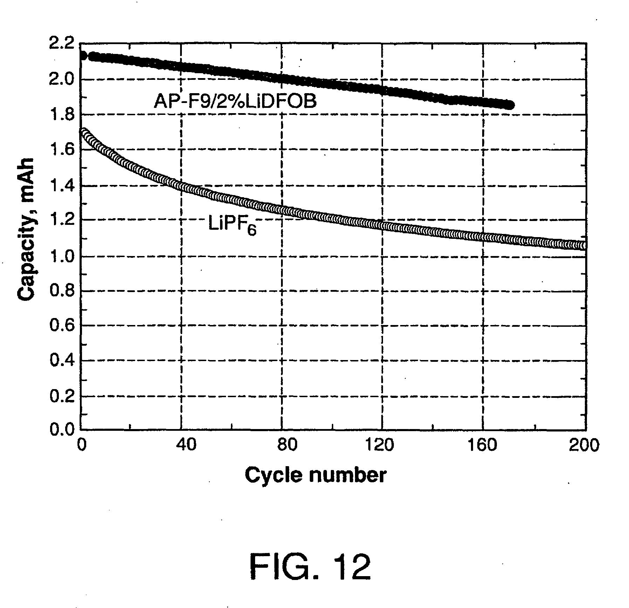

Figure 12 shows the discharge capacity retention of MCMB/ Li_{1.1}[Mn_{1/3}Ni_{1/3}Co_{1/3}]₀.₉O₂ (L333) lithium-ion cells cycled at 55°C with a constant current of 1.0 mA, or C/2. The electrolyte used for the control cell was 1.2 M LiPF₆ in 3EC/7EMC (by weight). The electrolyte of the invention used in the other cell was 0.4 M Li₂B₁₂F₁₂ in 3EC/7EMC (by weight) with 2 wt. % LiBF₂(C₂O₄) as an additive. The cells with the electrolyte of this invention show improved initial discharge capacity and capacity retention than that using the conventional LiPF₆-based electrolyte.

### Comparative Example 7

Cell performance of a conventional electrolyte (1.2 M LiPF₆ in 3EC/7EMC) vs. 0.4 M Li₂B₁₂F₁₂ in 3EC/7EMC.

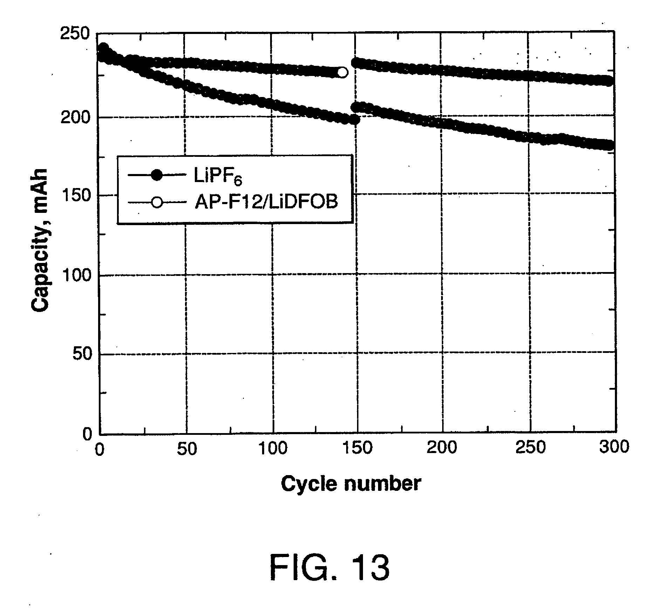

Figure 13 shows the discharge capacity of carbon/LiMn₂O₄ lithium-ion cells cycled at 55°C with a constant current of 1C, or 250 mA. The electrolyte used for the control cell was 1.2 M LiPF₆ in 3EC/7EMC (by weight). The electrolyte of the invention used in the other cell was 0.4 M Li₂B₁₂F₁₂ in 3EC/7EMC (by weight) with 2 wt. % LiBF₂(C₂O₄) as an additive. The cells with the electrolyte of this invention show improved initial discharge capacity and capacity retention than that using the conventional LiPF₆- based electrolyte.

Example 1 shows that the electrolytes of this invention can provide improved cell stability to lithium ion cells under conditions in which the cell are subjected to short overcharging events above the cells normal, upper operating potential.

Examples 3-6 show that the electrolytes of this invention can provide improved cell charge/discharge cycling stability at temperatures above 50°C than standard LiPF₆-based electrolytes. The electrolytes of this invention enable > 80% of the initial charge/discharge capacity to be retained for more than twice as many charge discharge cycles at > 50°C than standard LiPF₆-based electrolytes.

## Claims

1. A cell comprising: a positive electrode, a negative electrode and an electrolyte wherein the electrolyte comprises at least one organic aprotic carrier, at least one salt of the formula:
LiₐQ
where Q is a borate cluster anion or heteroborate cluster anion, and a is 1 or 2, and at least one additive, wherein the additive comprises a lithium chelatoborate salt, and wherein the additive is present in the electrolyte in an amount of between 0.1 and 5 % of the total weight of the electrolyte, and wherein the positive electrode comprises at least one of Li_{1.1}[Mn_{⅓}Ni_{⅓}Co_{⅓}]₀.₉O₂, and LiNi_{1-x-y}CoₓMn_{y}O₂.

2. The cell of Claim 1 wherein the cell is thermally stable.

3. The cell of Claim 1 wherein the salt comprises Li₂B₁₂FₓZ₁₂₋ₓ wherein x is at least 5 but less than or equal to 12 and Z represents H, Cl, or Br.

4. The cell of Claim 1 wherein the chelatoborate comprises a lithium difluoro(oxalato) borate.

5. The cell of Claim 1 wherein the negative electrode comprises at least one of graphite, amorphous carbon, hard carbon, tin, silicon, and lithium titanate.

6. The cell of Claim 5 wherein the negative electrode comprises a carbonaceous material.

7. The cell of Claim 1 wherein the positive electrode comprises Li_{1.1}[Mn_{⅓}Ni_{⅓}Co_{⅓}]₀.₉O₂.

8. The cell of Claim 1 wherein the solvent comprises ethylene carbonate.

9. The cell of Claim 1 wherein the solvent comprises ethylmethyl carbonate.

## Patentansprüche

1. Zelle, umfassend: eine positive Elektrode, eine negative Elektrode und einen Elektrolyten, wobei der Elektrolyt mindestens einen organischen aprotischen Träger, mindestens ein Salz der Formel:
LiₐQ
wobei Q ein Boratclusteranion oder Heteroboratclusteranion ist und a 1 oder 2 ist, und mindestens ein Additiv umfasst, wobei das Additiv ein Lithiumchelatoboratsalz umfasst und wobei das Additiv in dem Elektrolyten in einer Menge von zwischen 0,1 und 5 % des Gesamtgewichts des Elektrolyten vorhanden ist und wobei die positive Elektrode mindestens eines von Li_{1,1}[Mn_{⅓}Ni_{⅓}Co_{⅓}]_{0,9}O₂ und LiNi_{1-x-y}CoₓMn_{y}O₂ umfasst.

2. Zelle nach Anspruch 1, wobei die Zelle thermisch stabil ist.

3. Zelle nach Anspruch 1, wobei das Salz L₁₂B₁₂F_{X}Z₁₂₋ₓ umfasst, wobei x mindestens 5 aber niedriger als oder gleich 12 ist, und Z H, Cl oder Br darstellt.

4. Zelle nach Anspruch 1, wobei das Chelatoborat ein Lithiumdifluor(oxalato)borat umfasst.

5. Zelle nach Anspruch 1, wobei die negative Elektrode mindestens eines von Graphit, amorphem Kohlenstoff, hartem Kohlenstoff, Zinn, Silicium und Lithiumtitanat umfasst.

6. Zelle nach Anspruch 5, wobei die negative Elektrode ein kohlenstoffhaltiges Material umfasst.

7. Zelle nach Anspruch 1, wobei die positive Elektrode Li_{1,1}[Mn_{⅓}Ni_{⅓}Co_{⅓}]_{0,9}O₂ umfasst.

8. Zelle nach Anspruch 1, wobei das Lösungsmittel Ethylencarbonat umfasst.

9. Zelle nach Anspruch 1, wobei das Lösungsmittel Ethylmethylcarbonat umfasst.

## Revendications

1. Cellule comprenant : une électrode positive, une électrode négative et un électrolyte dans laquelle l'électrolyte comprend au moins un support organique aprotique, au moins un sel de formule :
LiₐQ
où Q est un agrégat d'anion borate ou un agrégat d'anion hétéroborate, et a est 1 ou 2, et au moins un additif, dans laquelle l'additif comprend un sel de chélatoborate de lithium, et dans laquelle l'additif est présent dans l'électrolyte dans une quantité entre 0,1 et 5% du poids total de l'électrolyte, et dans laquelle l'électrode positive comprend au moins un des Li_{1,1}[Mn_{⅓}Ni_{⅓}Co_{⅓}]₀,₉O₂, et LiNi_{1-x-y}CoₓMn_{y}O₂.

2. Cellule selon la revendication 1 dans laquelle la cellule est thermiquement stable.

3. Cellule selon la revendication 1 dans laquelle le sel comprend Li₂B₁₂FₓZ₁₂₋ₓ dans laquelle x est au moins 5 mais inférieur ou égal à 12 et Z représente H, Cl ou Br.

4. Cellule selon la revendication 1 dans laquelle le chélatoborate comprend un difluoro(oxalato)-borate de lithium.

5. Cellule selon la revendication 1 dans laquelle l'électrode négative comprend au moins un parmi le graphite, le carbone amorphe, le carbone dur, l'étain, le silicium et le titanate de lithium.

6. Cellule selon la revendication 5 dans laquelle l'électrode négative comprend un matériau carboné.

7. Cellule selon la revendication 1 dans laquelle l'électrode positive comprend du Li_{1,1}[Mn_{⅓}Ni_{⅓}Co_{⅓}]_{0,9}O₂.

8. Cellule selon la revendication 1 dans laquelle le solvant comprend du carbonate d'éthylène.

9. Cellule selon la revendication 1 dans laquelle le solvant comprend du carbonate d'éthylméthyle.
